# EUROPÄISCHE PATENTSCHRIFT

(11) **EP 1 258 640 B1**
(45) Veröffentlichungstag und Bekanntmachung des Hinweises auf die Patenterteilung: **11.08.2004**
(21) Anmeldenummer: 02007877.0
(22) Anmeldetag: 09.04.2002
(51) Int. Cl.: F16B 5/06

(54) **Planenhalter**
Tarpaulin holder
Dispositif de fixation d'une bâche

(30) Priorität: 16.05.2001 AT 3862001 U
(43) Veröffentlichungstag der Anmeldung: 20.11.2002
(73) Patentinhaber: Waldner, Ivo, 6112 Wattens (AT)
(72) Erfinder: Waldner, Ivo, 6112 Wattens (AT)
(74) Vertreter: Hofinger, Stephan

(56) Entgegenhaltungen:
- DE-A- 2 242 339
- DE-U- 8 903 643
- US-A- 3 890 680
- US-A- 4 978 265

## Beschreibung

Die vorliegende Erfindung betrifft einen Planenhalter zur Befestigung von mit Ösen versehenen Planen und Transparenten, wobei der Planenhalter in dem die Öse aufnehmenden Bereich im wesentlichen die Form eines Hohlzylinders aufweist, wobei zumindest ein Wandabschnitt des Hohlzylinders als Federzunge mit einer nach außen ragenden Rastnase ausgebildet ist und wobei der Planenhalter mindestens eine Durchgangsbohrung zur Befestigung des Planenhalters an einem Untergrund aufweist.

Planenhalter dienen dazu, mit Ösen versehene Planen und Transparente auf Gebäudeflächen oder Gerüstkonstruktionen zu befestigen. Wesentlich ist dabei, daß der Planenhalter eine rasche Montage und Demontage der Plane erlaubt. Im Gegensatz zu den beispielsweise aus der DE 93 08 331.9 U1 bekannten Planenbindern soll der Planenhalter die Plane nicht nur lose festhalten, sondern exakt positionieren. Dies ist beispielsweise notwendig, um die im zunehmenden Maße bedruckten Planen faltenfrei zu präsentieren.

Die DE 22 42 339 offenbart einen zweiteiligen Planenhalter mit einem Hohlzylinder als ersten Teil, dessen Wandabschnitt in Form von Federzungen mit nach außen ragenden Rastnasen ausgebildet ist und in den der zweite, in Form eines quadratischen Kopfes ausgeführte Teil des Planenhalters drehbar eingesetzt werden kann. Wird der zweite Teil gedreht, drücken dessen Ecken die Federzungen radial nach außen, wodurch die Öse der Plane durch die Rastnasen gehalten wird.

Die DE 89 03 643 U1 beschreibt einen einteiligen Planenhalter, der in Form einer Spreizklammer ausgebildet ist.

Beim erfindungsgemäßen Planenhalter ist dazu vorgesehen, daß die Durchgangsbohrung an der von der oder den Federzungen abgewandten Seite angeordnet ist und zentral, parallel zur Zylinderachse verläuft und daß die Federzunge(n) radial nach außen in die die Öse der Plane haltende Rastposition federn.

Der Hohlzylinder stimmt mit seinem Außendurchmesser im wesentlichen mit dem Innendurchmesser der Öse überein, wobei während des Aufsetzens der Öse auf den Planenhalter die Federzunge radial nach innen gedrückt wird, sodaß die Öse an der nach außen ragenden Rastnase vorbeirutscht. Die aufgesetzte Öse wird von der Rastnase formschlüssig hintergriffen.

Die Montage und Demontage ist dann besonders einfach, wenn beim Planenhalter mehrere Federzungen in Form eines Hohlzylinders angeordnet sind.

Um zu verhindern, daß sich einzelne Ösen von den Planenhaltem lösen und im schlimmsten Fall die gesamte Plane wegfliegt, kann vorgesehen sein, daß der Planenhalter zusätzlich ein Blockierelement aufweist, das zumindest in den vorderen Bereich der Federzunge(n) einsetzbar ist um eine radiale Bewegung der Federzunge(n) in Richtung der Mittelachse des Planenhalters zu verhindern.

Vorzugsweise weist das Blockierelement einen scheibenförmigen Bereich auf, dessen Durchmesser zumindest gleich groß ist wie der Außendurchmesser der Öse. Stimmt das Blockierelement in der Farbe mit der Plane überein, so sind die Befestigungsstellen aus der Entfernung nicht zu erkennen.

Um das Blockierelement seinerseits im Hohlzylinder zu sichern, kann das Blockierelement in dem in den Hohlzylinder ragenden Bereich einen Vorsprung aufweisen, der mit einer Ausnehmung im Inneren des Hohlzylinders des Planenhalters zusammenwirkt. Umgekehrt kann das Blockierelement in dem in den Hohlzylinder ragenden Bereich eine Ausnehmung aufweisen, die mit einem Vorsprung im Inneren Hohlzylinders des Planenhalters zusammenwirkt.

Da der Planenhalter eine Durchgangsbohrung aufweist, kann der Planenhalter mit einer Schraube von vorne an jedem Untergrund befestigt werden.

Um den Planenhalter auch von hinten befestigen zu können, ist vorzugsweise vorgesehen, daß im Bereich der Durchgangsbohrung ein Innengewinde angeordnet ist. In dieses Innengewinde kann von hinten ein Gewindestift eingeschraubt werden.

Ist der Durchmesser der Durchgangsbohrung kleiner als der Innendurchmesser des hohlzylinderförmigen Bereichs des Planenhalters, so entsteht ein Absatz, der das Widerlager einer Mutter bilden kann. In diese Mutter kann wiederum von der Hinterseite des Planenhalters her eine Schraube oder ein Gewindestift eingedreht werden.

Für eine kostengünstige Produktion ist es günstig, wenn der Planenhalter aus Kunststoff, insbesondere als Spritzgußteil hergestellt ist.

Weitere Merkmale und Einzelheiten der vorliegenden Erfindung ergeben sich aus der nachfolgenden Figurenbeschreibung. Dabei zeigt:
Fig. 1 die Ansicht einer mit Ösen versehenen Plane,
Fig. 2 den erfindungsgemäßen Planenhalter in Explosionsdarstellung,
Fig. 3 den erfindungsgemäßen Planenhalter in zusammengesetzter Darstellung,
Fig. 4 einen Längsschnitt durch den erfindungsgemäßen Planenhalter in zusammengesetztem Zustand und
Fig. 5 das vergrößerte Detail X aus Fig. 4.

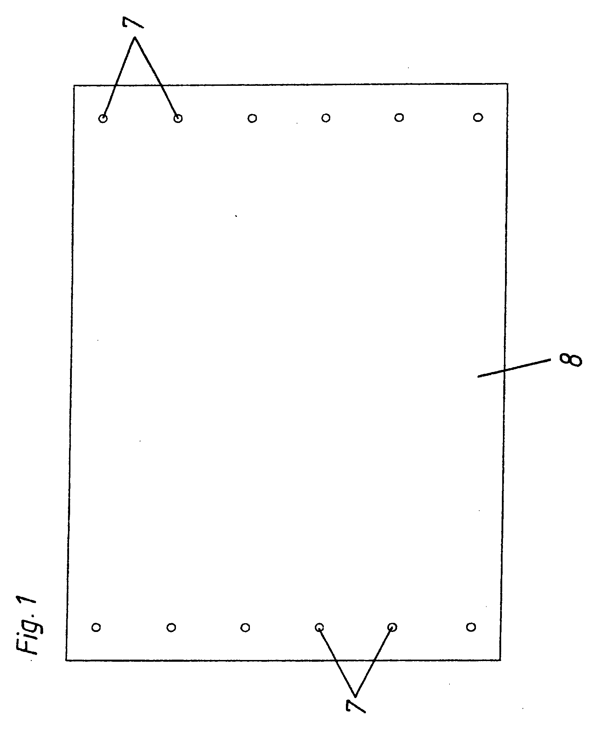

Fig. 1 zeigt eine Plane 8 mit Ösen 7, die mit den erfindungsgemäßen Planenhaltern 1 befestigt werden soll. Die Planenhalter 1 ermöglichen dabei eine sichere und faltenfreie Befestigung der Plane 8, sodaß auch allfällige Aufdrucke gut zur Geltung kommen. Der Begriff Plane ist in diesem Zusammenhang weit zu sehen und umfaßt die gesamte Produktpalette von Bauplanen bis hin zu aufwendig gestalteten Transparenten.

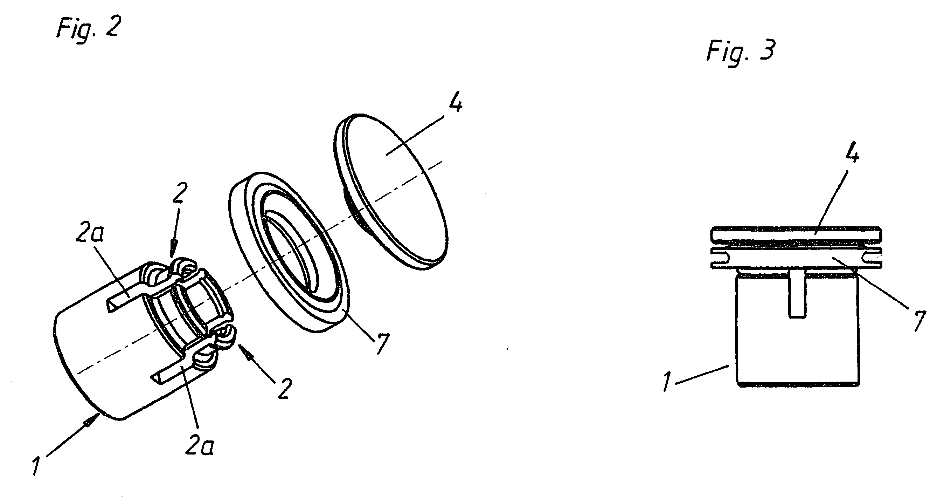

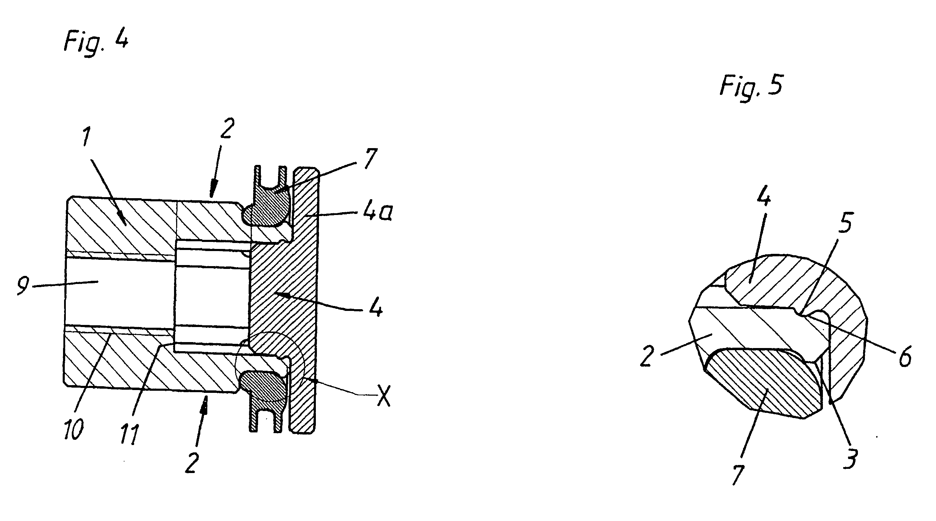

Der in den Fig. 2 bis 5 dargestellte erfindungsgemäße Planenhalter 1 weist an seiner Vorderseite vier symmetrisch angeordnete Federzungen 2 auf. Die Einschnitte 2a zwischen den Federzungen 2 ermöglichen eine radiale Bewegung der Federzungen 2 zur Mittelachse des Planenhalters 1 hin sowie radial von dieser Mittelachse weg.

Wird eine Öse 7, die in den Fig. 2 bis 4 losgelöst von der sie umgebenden Plane 8 gezeigt ist, auf den Planenhalter 1 aufgesetzt, so werden die Federzungen 2 vorerst aufgrund der nach außen ragenden Rastnasen 3 radial nach innen zur Mittelachse des Planenhalters 1 hin gedrückt. Sobald die gesamte Öse 7 die Rastnasen 3 überwunden hat, federn die Federzungen 2 wieder radial nach außen, wobei die Rastnasen 3 die Öse 7 formschlüssig hintergreifen.

Da die Öse 7 nur dann vom Planenhalter 1 wieder gelöst werden kann, wenn die Federzungen 2 in Umkehrung des zuvor beschriebenen Vorganges nach innen gedrückt werden, ist ein Blockierelement 4 vorgesehen, das diese radiale Bewegung der Federzungen 2 nach innen zur Mittelachse des Planenhalters 1 hin verhindert. Das Blockierelement 4 wird in den als Hohlzylinder ausgebildeten vorderen Bereich des Planenhalters 1 eingeschoben und verhindert eine gegenseitige Annäherung der Federzungen 2. Dadurch kann die Öse 7 die Rastnasen 3 nicht überwinden.

Um das Blockierelement 4 selbst gut zu verankern, weist es einen umlaufenden Vorsprung 5 auf, der mit einer umlaufenden Ausnehmung 6 im Inneren des hohlzylinderförmigen Bereichs des Planenhalters 1 zusammenwirkt. Eine Vertauschung von Vorsprung und Ausnehmung ist ebenso möglich.

Der scheibenförmige Bereich 4a des Blockierelements 4 stimmt im Durchmesser mit dem Außendurchmesser der Öse 7 überein und deckt diese vollständig ab. Weist das Blockierelement 4 die gleiche Farbe wie die Plane 8 auf, so ist die Befestigungsstelle kaum erkennbar.

Um den Planenhalter 1 auf beliebigem Untergrund befestigen zu können, ist im hinteren Bereich eine Durchgangsbohrung 9 mit einem Innengewinde 10 vorgesehen. Dadurch kann von hinten ein Gewindestift eingeschraubt werden. Dieser nicht gezeigte Gewindestift kann beispielsweise von einer Rohrschelle abstehen, die an einer Gerüststange befestigt ist. Ebenso kann der Gewindestift in einer Führungsschiene verschiebbar verankert sein, wodurch ein Spannen der Plane 8 ermöglicht wird. Sollte der Gewindestift mit dem Innengewinde 10 nicht zusammenpassen, so kann in den Planenhalter 1 auch eine Mutter eingelegt werden, die sich auf dem Absatz 11 abstützt. Somit können auch dünnere Gewindestifte verwendet werden. Umgekehrt ist es auch möglich, den Planenhalter 1 von vorne anzuschrauben, wobei sich die Schraube mit ihrem Kopf ebenfalls am Absatz 11 abstützt.

Sowohl der Planenhalter 1 wie auch das Blockierelement 4 werden am einfachsten und kostengünstigsten aus Kunststoff hergestellt. Damit wird auch ein günstiges Federverhalten der Federzungen 2 sichergestellt. Auch eine Farbanpassung des Blockierelementes 4 an unterschiedliche Planen und Transparente ist problemlos möglich, indem unterschiedlich gefärbte Blockierelemente 4 zu einem einheitlichen Planenhalter 1 angeboten werden.

Eine nicht gezeigte Sonderform der Erfindung sieht vor, daß in das Blockierelement 4 ein Schloß eingebaut ist, mit dem das Blockierelement 4 gegenüber dem Planenhalter 1 verriegelt werden kann. Auf diese Weise kann die Plane einfach gegen Diebstahl gesichert werden.

## Patentansprüche

1. Planenhalter zur Befestigung von mit Ösen versehenen Planen und Transparenten, wobei der Planenhalter (1) in dem die Öse (7) aufnehmenden Bereich im wesentlichen die Form eines Hohlzylinders aufweist, wobei zumindest ein Wandabschnitt des Hohlzylinders als Federzunge (2) mit einer nach außer ragenden Rastnase (3) ausgebildet ist und wobei der Planenhalter (1) mindestens eine Durchgangsbohrung (9) zur Befestigung des Planenhalters an einem Untergrund aufweist, **dadurch gekennzeichnet, daß** die Durchgangsbohrung (9) an der von der oder den Federzungen (2) abgewandten Seite angeordnet ist und zentral, parallel zur Zylinderachse verläuft und daß die Federzunge(n) (2) radial nach außen in die die Öse (7) der Plane (6) haltende Rastposition federn.

2. Planenhalter nach Anspruch 1, **dadurch gekennzeichnet, daß** der Durchmesser der Durchgangsbohrung (9) kleiner ist als der Innendurchmesser des hohlzylinderförmigen Bereichs des Planenhalters (1).

3. Planenhalter nach Anspruch 1 oder 2, **dadurch gekennzeichnet, daß** im Bereich der Durchgangsbohrung (9) ein Innengewinde (10) vorgesehen ist.

4. Planenhalter nach einem der Ansprüche 1 bis 3, **dadurch gekennzeichnet, daß** die Rastnase (3) im Gebrauch die aufgesetzte Öse (7) der Plane (6) formschlüssig hintergreift.

5. Planenhalter nach einem der Ansprüche 1 bis 4, **dadurch gekennzeichnet, daß** mehrere Federzungen (2) in Form eines Hohlzylinders angeordnet sind.

6. Planenhalter nach einem der Ansprüche 1 bis 5, **dadurch gekennzeichnet, daß** in der Planenhalter (1) zusätzlich ein Blockierelement (4) aufweist, das zumindest in den Bereich der Rastnase(n) (3) der Federzunge(n) (2) einsetzbar ist, um eine radiale Bewegung der Federzunge(n) (2) in Richtung der Mittelachse des Planenhalters (1) zu verhindern.

7. Planenhalter nach Anspruch 6, **dadurch gekennzeichnet, daß** das Blockierelement (4) einen scheibenförmigen Bereich (4a) aufweist, dessen Durchmesser zumindest gleich groß ist wie der Außendurchmesser der Öse (5).

8. Planenhalter nach Anspruch 6 oder 7, **dadurch gekennzeichnet, daß** das Blockierelement (4) in dem in den Hohlzylinder ragenden Bereich einen Vorsprung (5) aufweist, der mit einer Ausnehmung (6) im Inneren des Hohlzylinders des Planenhalters (1) zusammenwirkt.

9. Planenhalter nach Anspruch 6 oder 7, **dadurch gekennzeichnet, daß** das Blockierelement (4) in dem in den Hohlzylinder ragenden Bereich eine Ausnehmung aufweist, die mit einem Vorsprung im Inneren des Hohlzylinders des Planenhalters (1) zusammenwirkt.

10. Planenhalter nach einem der Ansprüche 1 bis 9, **dadurch gekennzeichnet, daß** der Planenhalter (1) aus Kunststoff, insbesondere als Spritzgußteil hergestellt ist.

## Claims

1. A tarpaulin holder for fixing tarpaulins and banners provided with eyes, wherein the tarpaulin holder (1) in the region accommodating the eye (7) is substantially in the form of a hollow cylinder, wherein at least one wall portion of the hollow cylinder is in the form of a spring tongue (2) with an outwardly projecting retaining nose (3) and wherein the tarpaulin holder (1) has at least one through bore (9) for fixing the tarpaulin holder to a support, **characterised in that** the through bore (9) is arranged at the side remote from the spring tongue or tongues (2) and extends centrally parallel to the axis of the cylinder, and that the spring tongue or tongues (2) spring radially outwardly into the retaining position holding the eye (7) of the tarpaulin (6).

2. A tarpaulin holder according to claim 1 **characterised in that** the diameter of the through bore (9) is smaller than the inside diameter of the hollow-cylindrical region of the tarpaulin holder (1).

3. A tarpaulin holder according to claim 1 or claim 2 **characterised in that** a female screwthread (10) is provided in the region of the through bore (9).

4. A tarpaulin holder according to one of claims 1 to 3 **characterised in that** the retaining nose (3) in use engages in positively locking relationship behind the fitted eye (7) of the tarpaulin (6).

5. A tarpaulin holder according to one of claims 1 to 4 **characterised in that** a plurality of spring tongues (2) are arranged in the form of a hollow cylinder.

6. A tarpaulin holder according to one of claims 1 to 5 **characterised in that** the tarpaulin holder (1) additionally has a blocking element (4) which can be fitted at least into the region of the retaining nose or noses (3) of the spring tongue or tongues (2) in order to prevent radial movement of the spring tongue or tongues (2) in the direction of the central axis of the tarpaulin holder (1).

7. A tarpaulin holder according to claim 6 **characterised in that** the blocking element (4) has a disc-shaped region (4a), the diameter of which is at least equal to the outside diameter of the eye (5).

8. A tarpaulin holder according to claim 6 or claim 7 **characterised in that** in the region projecting into the hollow cylinder the blocking element (4) has a projection (5) which co-operates with a recess (6) in the interior of the hollow cylinder of the tarpaulin holder (1).

9. A tarpaulin holder according to claim 6 or claim 7 **characterised in that** in the region projecting into the hollow cylinder the blocking element (4) has a recess which co-operates with a projection in the interior of the hollow cylinder of the tarpaulin holder (1).

10. A tarpaulin holder according to one of claims 1 to 9 **characterised in that** the tarpaulin holder (1) is made from plastic material, in particular in the form of an injection moulding.

## Revendications

1. Dispositif de fixation de bâche pour la fixation de bâches et transparents munis d'oeillets, le dispositif de fixation de bâche (1) ayant sensiblement la forme d'un cylindre creux dans la zone destinée à recevoir l'oeillet (7), au moins une partie de la paroi du cylindre creux étant conçue sous forme de languette flexible (2) avec un téton d'arrêt (3) en saillie vers l'extérieur et le dispositif de fixation de bâche (1) comportant au moins un trou traversant (9) pour fixer le dispositif de fixation de bâche contre une base, **caractérisé en ce que** le trou traversant (9) est réalisée sur le côté opposé à la ou aux languettes flexibles (2) et s'étend au centre, parallèlement à l'axe du cylindre et **en ce que** la/les languette(s) flexible(s) (2) font ressort radialement vers l'extérieur dans la position de blocage retenant les oeillets (7) de la bâche (6).

2. Dispositif de fixation de bâche selon la revendication 1, **caractérisé en ce que** le diamètre du trou traversant (9) est inférieur au diamètre intérieur de la partie en forme de cylindre creux dans le dispositif de fixation de bâche (1).

3. Dispositif de fixation de bâche selon la revendication 1 ou 2, **caractérisé en ce qu'**il est prévu un taraudage (10) dans la zone du trou traversant (9).

4. Dispositif de fixation de bâche selon l'une quelconque des revendications 1 à 3, **caractérisé en ce que** le téton d'arrêt (3), en cours de service, est reçu par emboîtement derrière l'oeillet (7) de la bâche (6), mis en place.

5. Dispositif de fixation de bâche selon l'une quelconque des revendications 1 à 4, **caractérisé en ce que** plusieurs languettes flexibles (2) sont agencées en formant un cylindre creux.

6. Dispositif de fixation de bâche selon l'une quelconque des revendications 1 à 5, **caractérisé en ce que** le dispositif de fixation de bâche (1) comporte en plus un élément de blocage (4), qui peut être posé au moins dans la zone du/des téton(s) d'arrêt (3) de la ou des languette(s) flexible(s) (2) pour empêcher un mouvement radial de la ou des languette(s) flexible(s) (2) en direction de l'axe médian du dispositif de fixation de bâche (1).

7. Dispositif de fixation de bâche selon la revendication 6, **caractérisé en ce que** l'élément de blocage (4) comporte une zone (4a) en forme de disque, dont le diamètre est au moins égal au diamètre extérieur de l'oeillet (7) .

8. Dispositif de fixation de bâche selon la revendication 6 ou 7, **caractérisé en ce que** l'élément de blocage (4), dans la zone pénétrant dans le cylindre creux, comporte une saillie (5) qui coopère avec un évidement (6) à l'intérieur du cylindre creux du dispositif de fixation de bâche (1).

9. Dispositif de fixation de bâche selon la revendication 6 ou 7, **caractérisé en ce que** l'élément de blocage (4), dans la zone pénétrant dans le cylindre creux, comporte un évidement qui coopère avec une saillie à l'intérieur du cylindre creux du dispositif de fixation de bâche (1).

10. Dispositif de fixation de bâche selon l'une quelconque des revendications 1 à 9, **caractérisé en ce que** le dispositif de fixation de bâche (1) est réalisé en matière plastique, en particulier sous forme de pièce moulée par injection.
